# EUROPÄISCHE PATENTSCHRIFT

(11) **EP 0 458 998 B1**
(45) Veröffentlichungstag und Bekanntmachung des Hinweises auf die Patenterteilung: **03.01.1996**
(21) Anmeldenummer: 90110285.5
(22) Anmeldetag: 30.05.1990
(51) Int. Cl.: G01F 1/68

(54) **Strömungswandler**
Current convertor
Convertisseur de courant

(43) Veröffentlichungstag der Anmeldung: 04.12.1991
(73) Patentinhaber: SIEMENS AKTIENGESELLSCHAFT, D-80333 München (DE)
(72) Erfinder: Molin, Marek, Dipl.-Ing., D-8402 Neutraubling (DE); Wildgen, Andreas, Dr.-Ing., D-8419 Nittendorf (DE)

(56) Entgegenhaltungen:
- FR-A- 2 434 374
- US-A- 3 645 133
- FISITA-KONGRESS-BERICHT 1986 Nr. 865078 1986, BELGRAD, JUGOSLAVIEN, Seiten 3125-3131; G. HÄRTEL et al.: "ENTWICKLUNG EINES NEUEN ELEKTONISCHEN GEMISCHBILDUNGSSYSTEMS"
- MESSEN + PRUFEN, Nr. 12, Dezember 1985, BAD WORISHOFEN DE, Seiten 668-671; M. HOHENSTATT : "ERWEITERTE ANWENDUNGSMÖGLICHKEITEN FÜR THERMISCHEN MASSENSTROMMESSER"

## Beschreibung

Die Erfindung betrifft einen Strömungswandler für einen Luftmassenmesser, z.B. für den Ansaugkanal einer Brennkraftmaschine, gemäß Oberbegriff von Anspruch 1.

Ein solcher Strömungswandler wird beschrieben in "Entwicklung eines neuen elektronischen Gemischbildungssystems" von G. Härtel, W. Jordan und E. Schulte, Fisita-Kongreß-Bericht 1986, Nr. 865078, Belgrad. In ihm werden durch ein Gitter, das zwischen einem Strömungsgleichrichter und einem Luftmassenmesser angeordnet ist, Mikrowirbel zur Stabilisierung des Meßsignals erzeugt. Der Strömungsgleichrichter und das Gitter sind zwei separate Bauteile, die in einem Abstand voneinander in den Ansaugkanal eingesetzt und bezüglich des Luftmassenmessers genau ausgerichtet werden müssen. Andernfalls wird der Druck durch den Strömungswandler erniedrigt und die am Luftmassenmesser gemessenen Signale streuen zu sehr.

Der Erfindung liegt die Aufgabe zugrunde, einen Strömungswandler der eingangs genannten Art so auszubilden, daß durch ihn die angesaugte Luft einen geringen Druckverlust erfährt bei gleichzeitig kleiner Signalstreuung des Luftmassenmessers.

Diese Aufgabe wird durch den kennzeichnenden Teil des Patentanspruchs 1 sowie durch den Verfahrensanspruch 8 gelöst. Vorteilhafte Weiterbildungen sind in den Unteransprüchen gekennzeichnet.

Der Strömungsgleichrichter wird beispielsweise durch Spritzgießen hergestellt. Durch das Spritzgießen kann jeder beliebig geformte, dem Zweck dienender Wabenkörper aufgebaut werden. Ein weiterer Vorteil liegt darin, daß der Strömungsgleichrichter durch das Herstellungsverfahren für die Massenfertigung geeignet und sehr kostengünstig ist. Das Gitter ist aus einem reaktionsträgem Metall hergestellt. Dadurch wird der Kunststoff des Strömungsgleichrichters vor thermischen Einflüssen, wie z.B. vor Rückzündungen aus dem Brennraum der Brennkraftmaschine, geschützt. Da das Gitter an dem Strömungsgleichrichter dauerhaft befestigt ist, wird die Lagerhaltung der Strömungswandler vereinfacht. Weiterhin wird um das Gitter ein Einfassungsring, der bei dem bekannten Strömungswandler zur Montage in den Ansaugkanal dient, eingespart.

Ein Ausführungsbeispiel der Erfindung wird anhand der beigefügten Zeichnungen erläutert. Es zeigen:
- Fig. 1: eine Explosionszeichnung eines erfindungsgemäßen Strömungswandlers, bestehend aus einem Strömungsgleichrichter und einem Gitter, zusammen mit einem Luftmassenmesser im Ansaugkanal einer Brennkraftmaschine angeordnet,
- Fig. 2: einen Querschnitt des Strömungsgleichrichters nach Fig. 1, der sich aus einem Wabenkörper und einem Ring zusammensetzt,
- Fig. 3: einen Längsschnitt des Strömungswandlers nach Fig. 1, und
- Fig. 4: einen Längsschnitt des Ansaugkanal, in dem der Strömungswandler nach Fig. 1 angeordnet ist.

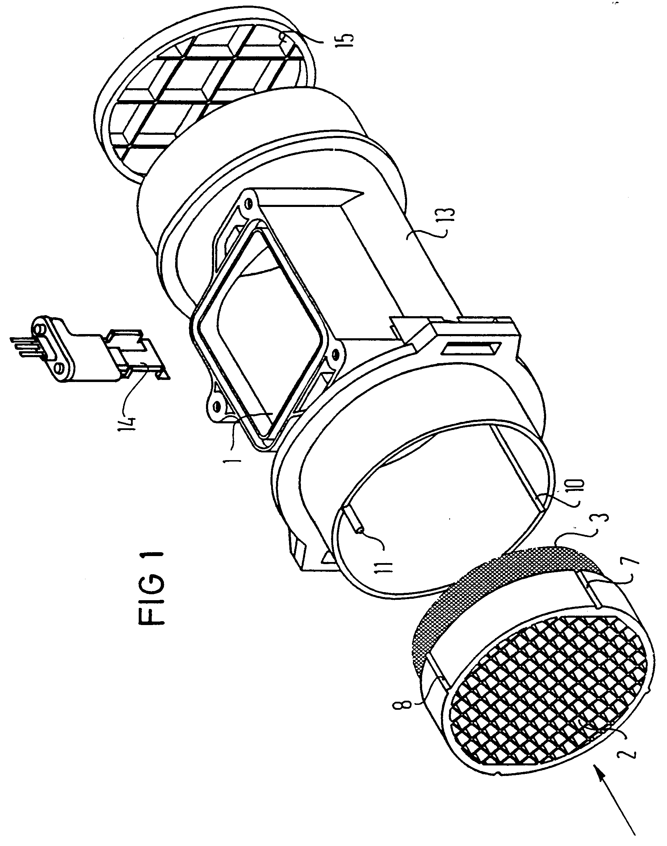

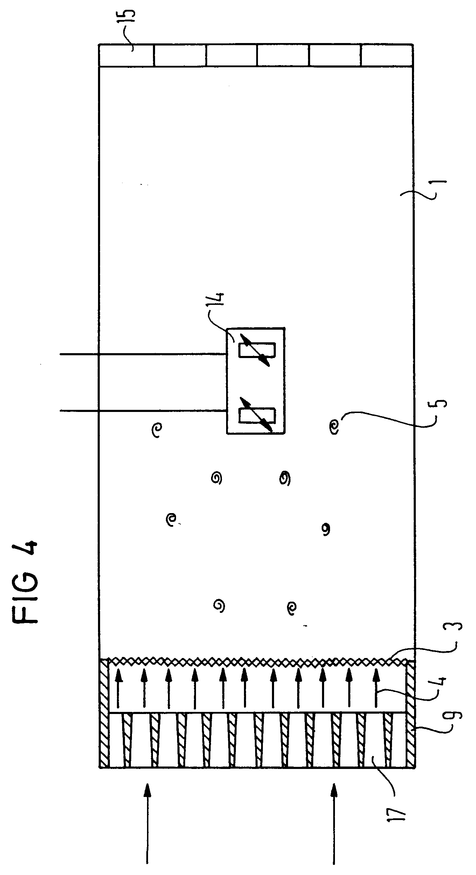

An dem stromaufwärtigen Ende eines Ansaugkanals 1 (Fig. 1) - hier aber auseinandergezogen dargestellt - befindet sich ein Strömungswandler, der aus einem Strömungsgleichrichter 2 und einem Gitter 3 besteht. Der von einer Brennkraftmaschine angesaugte Luftmassenstrom wird durch den Strömungsgleichrichter 2 in eine laminare Luftströmung 4 (vgl. Fig. 4 ) gewandelt. Der Pfeil gibt die Richtung der Strömung an. Durch das stromabwärts folgende Gitter 3 werden Mikrowirbel 5 erzeugt. Der Strömungsgleichrichter 2 und das Gitter 3 werden bei der Montage mittels Nuten 7 und Stegen 8, die in einen Ring 9 integriert sind und weiteren Nuten 10 und weitere Stege 11, die sich in einem Gehäuse 13 befinden, in dem Ansaugkanal 1 zentriert und fixiert. Bei dem vorliegenden Anwendungsbeispiel sind zwei Nuten 7 und zwei Stege 8 im Ring 9 vorhanden, die jeweils gegenüberliegend angeordnet sind. Entsprechend ist das Gehäuse 13 mit zwei Nuten 10 und zwei Stegen 11 versehen.

Ein Luftmassenmesser 14, der sich stromabwärts vom Gitter 3 parallel zur Strömungsrichtung im Ansaugkanal 1 befindet, dient der direkten Lasterfassung für ein Motorsteuerungssystem. Er arbeitet nach dem Prinzip eines Heißfilmanemometers. Um eine möglichst hohe Meßgenauigkeit und hohe Signalstabilität zu erhalten, müssen mehrere Mikrowirbel 5 über die aktive Fläche eines Heißfilmwiderstandes und eines Vergleichswiderstandes streichen. Der Strom zur Erzeugung einer konstanten Temperaturerhöhung des Heißfilmwiderstandes ist ein Maß für den durchgesetzten Luftmassenstrom. Der Luftmassenmesser 14 muß daher im Bereich der Mikrowirbel 5 liegen.

Am stromabwärtigen Ende des Ansaugkanals 1 befindet sich ein Schutzgitter 15, das den Luftmassenmesser 14 vor mechanischen Einwirkungen schützen soll, beispielsweise vor direktem Berühren mit der Hand. Es ist so weitmaschig gefertigt, daß es weder die Meßgenauigkeit des Luftmassenmessers 14 noch den Luftmassenstrom merklich beeinflußt.

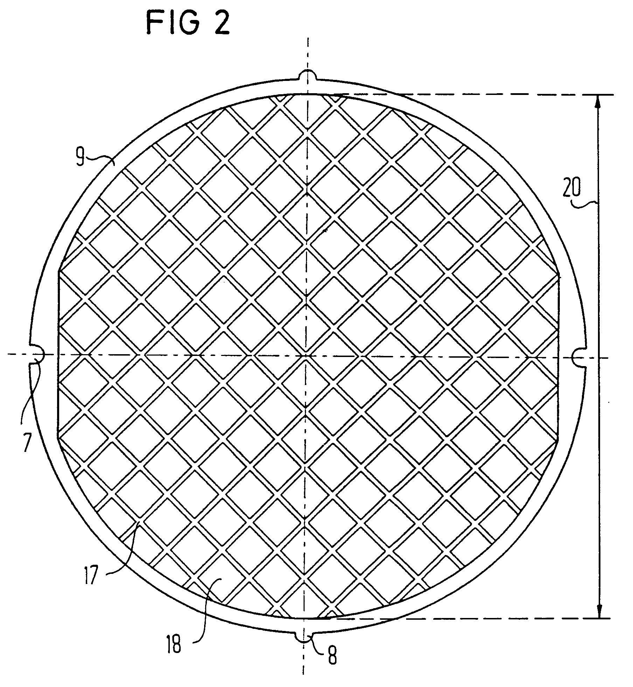

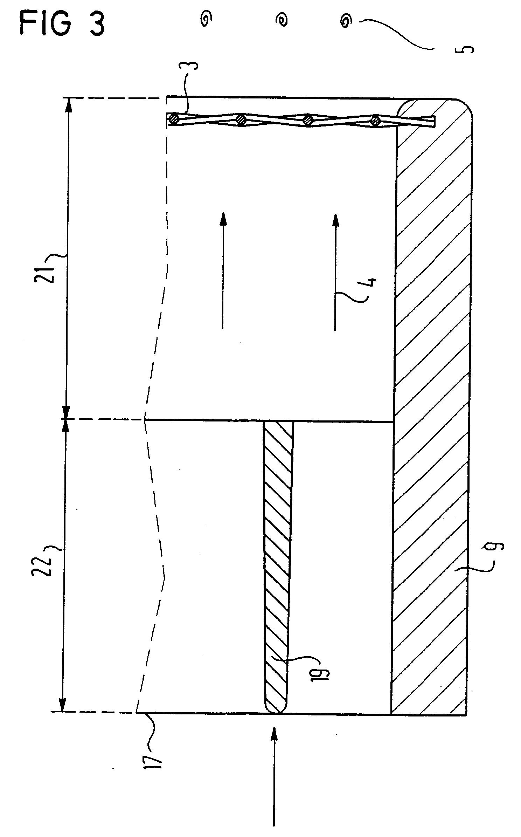

Der Strömungsgleichrichter 2 (Fig. 2) besteht aus einem Wabenkörper 17 und einem Ring 9. Der Wabenkörper 17 wird aus quadratischen Waben 18 gebildet. Die Wabenweite, d.h. der Abstand von Wabenwand 19 (Fig. 3) zu Wabenwand, beträgt bei der stromabwärtigen Kante etwa 4 mm. Für andere Anwendungsfälle ist es vorteilhaft, die Wabenweite zu verkleinern. Die Querschnittsfläche der Waben 18 bleibt über den gesamten Querschnitt des Strömungsgleichrichters 2 konstant.

Das Verhältnis der Wabenweite zu der Wandstärke stellt einen Kompromiß dar zwischen der Signalstabilität des Luftmassenmessers 14 und dem Druckverlust durch den Strömungsgleichrichter 2. Der Durchmesser 20 des Wabenkörpers 17 ist entsprechend der Brennkraftmaschine ausgelegt und hängt von der angesaugten Luftmasse ab, er beträgt hier etwa 63 mm.

Bei der Montage wird der Strömungswandler entlang der Nuten 10 in das Gehäuse 13 geschoben, bis die Stege 11 über die Nuten 7 herausragen. Die Stege 11 werden anschließend so verformt, daß der Strömungswandler im Ansaugkanal 1 fixiert ist. Der Wabenkörper 17 ist in der Umgebung der Nut 7 abgeflacht, damit der Ring 9 an dieser Stelle verstärkt werden kann.

Die Signalstreuung bei dem hier verwendeten Luftmassenmesser 14 ist am geringsten, wenn der Winkel zwischen den Rechteckdiagonalen der Waben 18 und der Stirnkante des Luftmassenmessers 14 etwa 0° beträgt, wobei die aktive Fläche des Luftmassenmessers parallel zur Achse des Ansaugkanals 1 angeordnet ist. Bei anderen Luftmassenmessern 14, die zusammen mit dem Strömungswandler verwendet werden können, kann die Signalstreuung bei einem Winkel von etwa 45° am kleinsten werden. Im vorliegenden Falle ist die Position der Stege 8 und der Nuten 7 am Ring 9 so gewählt, daß eine Rechteckdiagonale der Waben 18 bei der Montage parallel zu dem stromabwärts befindlichen Luftmassenmesser 14 verläuft.

Als Material für den Strömungsgleichrichter 2 wird hier Polybutylenterephthalat (PBTP) verwendet, da PBTP bis ca. 215°C kurzfristig hitzebeständig ist und sich sehr gut zu spritzgegossenen Teilen verarbeiten läßt. Für andere Ausführungsbeispiele können auch weitere Kunststoffe Verwendung finden, die sich zum Spritzgießen eignen und den Anforderungen hinsichtlich ihrer Verwendung genügen. Bei Temperaturen größer als 215°C muß der Kunststoff thermoplastisch sein, um das Gitter 3 mit dem Strömungsgleichrichter 2 dauerhaft zu verbinden.

Der Strömungsgleichrichter 2 muß einen möglichst geringen Luftwiderstand besitzen. Daher muß ein durch das Spritzgußverfahren bedingter Anguß entfernt werden. Besonderes Augenmerk gilt dabei einem zentrischen Bereich mit einem Durchmesser von etwa 20 mm um die Achse des Ansaugkanals 1, da der Luftmassenmesser 14 von der Luft, die durch diesen Bereich strömt, überstrichen wird.

Der Querschnitt einer Wabenwand 19 (Fig. 3) ist über den gesamten Wabenkörper 17 konstant und trapezförmig geformt. Die Wandstärke nimmt in Strömungsrichtung zu und beträgt etwa 0,6 mm an ihrer stärksten Stelle. Die Pfeile in Fig. 3 zeigen die Strömungsrichtung an. Die stromaufwärtige Kante ist abgerundet. Die stromabwärtige Kante muß scharfkantig ausgebildet sein, damit die Strömung ohne Wirbelbildung sauber abreißen kann.

Zur Erzeugung der Mikrowirbel 5 reicht schon ein Abstand 21 von etwa 1 mm zwischen Gitter 3 und Wabenkörper 17 aus. Bei diesem Ausführungsbeispiel wird die kleinste Signalstreuung am Luftmassenmesser 14 erzeugt, wenn der Abstand 21 etwa 7 mm beträgt.

Vorzugsweise wird für das Gitter 3 ein Edelstahl verwendet, hier beispielsweise ein Chrom-Nickel-Stahl (X5CrNi1810). Der Edelstahl bietet Schutz für den Wabenkörper 17 vor thermischen Einflüssen bei Rückzündungen aus dem Brennraum der Brennkraftmaschine, und er ist gegen Umwelteinflüsse wie Verschmutzen und Luftfeuchtigkeit resistent. Das Gitter 3 wird in den Ring 9 "warm eingebettet", d.h. vor der Montage des Strömungswandlers in den Ansaugkanal 1 wird das Gitter 3 erhitzt und in den Ring 9 des Strömungsgleichrichters 2 eingedrückt. Auf diese Weise hält das Gitter 3 einen festen Abstand 21 zum Strömungsgleichrichter 2 ein.

Um den Druckverlust und die Signalstreuung möglichst gering zu halten, müssen die Drähte des Gitters 3 parallel zu den Wabenwänden 19 eingebettet sein. Das Gitter 3 wird vor dem Zusammenfügen mit dem Strömungsgleichrichter 2 kalandert, d.h. das Gitter wird so gewalzt, daß sich die Drähte des Gitters nicht gegeneinander verschieben können. Die Abstände von Draht zu Draht des Gitters 3 sind abhängig vom Druckverlust und den zu erzeugenden Mikrowirbel 5. Die Abstände betragen hier etwa 1 mm bei einer Drahtstärke von etwa 0,2 mm.

Bei dem vorliegenden Strömungswandler beträgt der Druckverlust weniger als 12 hPa und die Signalstreuung maximal +/- 3,5 % vom Luftmassenstrom. Die Tiefe 22 des Wabenkörpers 17 stellt einen Kompromiß dar zwischen geringer Signalstreuung und hohem Fertigungsaufwand für den Strömungsgleichrichter 2. Die Tiefe 22 sollte größer als 5 mm sein, um eine einwandfreie laminare Luftströmung 4 zu erzeugen. Derzeit beträgt die Tiefe 22 etwa 7 mm. Bei anderen Ausführungsbeispielen kann eine größere Tiefe 22 vorteilhafter sein.

In Fig. 4 ist insbesondere die Lage des Luftmassenmessers 14 im Bereich der Mikrowirbel 5 verdeutlicht. Das stromabwärts vom Strömungsgleichrichter 2 gelegene Gitter 3 erzeugt in der laminaren Luftströmung 4 Mikrowirbel 5, die eine möglichst genaue Messung des Luftmassenstroms gewährleisten.

Der Ausdruck "Ansaugkanal" umschließt auch Ansaugkanäle mit beliebigen anderen als rundem Querschnitt. Dies gilt entsprechend für den Querschnitt des Strömungsgleichrichters.

## Patentansprüche

1. Strömungswandler für einen Luftmassenmesser (14), insbesondere für den Ansaugkanal (1) einer Brennkraftmaschine, der aufweist
- einen Strömungsgleichrichter (2), in dem die angesaugte Luftmasse in eine laminare Luftströmung (4) gewandelt wird und
- ein Gitter (3), durch das in der laminaren Luftströmung (4) Mikrowirbel (5) erzeugt werden, **dadurch gekennzeichnet**,
- daß der Strömungsgleichrichter (2) einstückig aus einem Wabenkörper (17) und einem Ring (9) besteht,
- daß der Ring (9) aus einer senkrecht zur Strömungrichtung angeordneten Oberfläche des Wabenkörpers (17) herausragt,
- daß der Strömungsgleichrichter (2) aus einem thermoplastischen Kunststoff hergestellt ist, und
- daß das Gitter (3) im Ring des Strömungsgleichrichters (2) dauerhaft befestigt ist.

2. Strömungswandler nach Anspruch 1, **dadurch gekennzeichnet**, daß die Querschnittsfläche einer Wabenwand (19) in Strömungsrichtung an jeder Stelle des Wabenkörpers (17) konstant und trapezförmig ausgebildet ist.

3. Strömungswandler nach Anspruch 2, **dadurch gekennzeichnet**, daß die stromaufwärts gelegenen Kanten des Wabenkörpers (17) abgerundet sind.

4. Strömungswandler nach Anspruch 3, **dadurch gekennzeichnet**, daß die Wabenweite maximal 5 mm beträgt.

5. Strömungswandler nach Anspruch 4, **dadurch gekennzeichnet**, daß der Abstand (21) zwischen dem Gitter (3) und dem Wabenkörper (17) mindestens 1 mm beträgt.

6. Strömungswandler nach Anspruch 5, **dadurch gekennzeichnet**, daß das Gitter (3) aus einem reaktionsträgem Metall besteht.

7. Strömungswandler nach Anspruch 6, **dadurch gekennzeichnet**, daß der Strömungsgleichrichter (2) Zentrier- und Fixierelemente enthält.

8. Verfahren zum Herstellen eines Strömungswandlers, nach einem der vorhergehenden Ansprüche, mit einem Strömungsgleichrichter (2), in dem die angesaugte Luftmasse in eine laminare Luftströmung (4) gewandelt wird und einem Gitter (3), durch das in der laminaren Luftströmung (4) Mikrowirbel (5) erzeugt werden, **dadurch gekennzeichnet**,
- daß ein aus einem Wabenkörper (17) und einem Ring (9) bestehender einstückiger Strömungsgleichrichter (2) mittels eines thermoplastischen Kunststoffs spritzgegossen wird, wobei der Ring (9) aus einer senkrecht zur Strömungsrichtung angeordneten Oberfläche des Wabenkörpers (17) herausragt, und
- daß ein Gitter (3) in erhitztem Zustand in den Ring (9) des Strömungsgleichrichters (2) eingebettet wird.

9. Verfahren nach Anspruch 8, **dadurch gekennzeichnet**, daß das Gitter (3) kalandert wird.

## Claims

1. Flow converter for an air flow rate meter (14), in particular for the suction port (1) of an internal combustion engine, having
- a flow rectifier (2) in which the sucked-in air flow rate is converted into a laminar air flow (4) and
- a grid (3) by means of which microscopic eddies (5) are produced in the laminar air flow (4),
characterized in that
- the flow rectifier (2) consists integrally of a honeycomb body (17) and a ring (9),
- the ring (9) projects out of a surface, arranged perpendicularly to the flow direction, of the honeycomb body (17),
- the flow rectifier (2) is made from a thermoplastic, and
- the grid (3) is permanently fixed in the ring of the flow rectifier (2).

2. Flow converter according to Claim 1, characterized in that the cross-sectional area of a honeycomb wall (19) is designed to be constant and trapezoidal in the flow direction at each point on the honeycomb body (17).

3. Flow converter according to Claim 2, characterized in that the edges, positioned upstream, of the honeycomb body (17) are rounded off.

4. Flow converter according to Claim 3, characterized in that the honeycombs have a maximum width of 5 mm.

5. Flow converter according to Claim 4, characterized in that the distance (21) between the grid (3) and the honeycomb body (17) is at least 1 mm.

6. Flow converter according to Claim 5, characterized in that the grid (3) consists of a chemically inert metal.

7. Flow converter according to Claim 6, characterized in that the flow rectifier (2) contains centring and fixing elements.

8. Method for producing a flow converter, according to one of the preceding claims, having a flow rectifier (2) in which the sucked-in air flow rate is converted into a laminar air flow (4) and a grid (3) by means of which microscopic eddies (5) are produced in the laminar air flow (4),
characterized in that
- an integral flow rectifier (2) consisting of a honeycomb body (17) and a ring (9) is injectionmoulded by means of a thermoplastic, the ring (9) projecting out of a surface, arranged perpendicularly to the flow direction, of the honeycomb body (17), and
- a grid (3) is embedded in the heated state into the ring (9) of the flow rectifier (2).

9. Method according to Claim 8, characterized in that the grid (3) is calendered.

## Revendications

1. Convertisseur d'écoulement pour un appareil à mesurer les débits d'air (14), en particulier pour le canal d'aspiration (1) d'un moteur à combustion interne, qui comprend :
- un égaliseur d'écoulement (2) dans lequel le débit d'air aspiré est converti en un flux d'air laminaire (4) et
- une grille (3) qui produit des microturbulences (5) dans le flux d'air laminaire (4), caractérisé en ce que
- l'égaliseur d'écoulement (2) est réalisé en une pièce et formé d'un corps à treillis (17) et d'un anneau (9),
- l'anneau (9) dépasse d'une surface du corps à treillis (17) orientée perpendiculairement à la direction de l'écoulement,
- l'égaliseur d'écoulement (2) est constitué d'une matière thermoplastique,
- et en ce que la grille (3) est fixée de manière durable dans l'anneau de l'égaliseur d'écoulement (2).

2. Convertisseur d'écoulement selon la revendication 1, caractérisé en ce que l'aire transversale de la maille (19) est constante en tout endroit du corps à treillis (17) dans la direction de l'écoulement et est de forme trapézoïdale.

3. Convertisseur d'écoulement selon la revendication 2, caractérisé en ce que les bords amont du corps à treillis (17) sont arrondis.

4. Convertisseur d'écoulement selon la revendication 3, caractérisé en ce que la largeur des mailles atteint au maximum 5 mm.

5. Convertisseur d'écoulement selon la revendication 4, caractérisé en ce que la distance (21) entre la grille (3) et le corps à treillis (17) atteint au minimum 1 mm.

6. Convertisseur d'écoulement selon la revendication 5, caractérisé en ce que la grille (3) est constituée d'un métal à réaction lente.

7. Convertisseur d'écoulement selon la revendication 6, caractérisé en ce que l'égaliseur d'écoulement (2) comprend des éléments de centrage et de fixation.

8. Procédé de fabrication d'un convertisseur d'écoulement selon l'une des revendications précédentes, avec un égaliseur d'écoulement (2), dans lequel la masse d'air aspiré est convertie en un flux d'air laminaire (4) et avec une grille (3) qui produit des microturbulences (5) dans le flux d'air laminaire (4)
caractérisé en ce que
- un égaliseur d'écoulement (2) en une pièce, constitué d'un corps à treillis (17) et d'un anneau (9), est injecté en matière thermoplastique, l'anneau (9) dépassant d'une surface du corps à treillis (17) orientée perpendiculairement à la direction de l'écoulement,
- et en ce que la grille (3) est sertie à chaud dans l'anneau (9) de l'égaliseur d'écoulement (2).

9. Procédé selon la revendication 8, caractérisé en ce que la grille (3) est calandrée.
